Europäisches Patentamt

European Patent Office

Office européen des brevets

(19)

(11) Veröffentlichungsnummer: **0 287 702 B1**

## (12) EUROPÄISCHE PATENTSCHRIFT

(45) Veröffentlichungstag der Patentschrift: **20.03.91**

(51) Int. Cl.⁵: **F16B 23/00, B25B 13/06**

(21) Anmeldenummer: **87111882.4**

(22) Anmeldetag: **20.08.87**

(54) **KFZ-Rad Sicherungsvorrichtung.**

(30) Priorität: **17.04.87 DE 3713166**

(43) Veröffentlichungstag der Anmeldung:
**26.10.88 Patentblatt 88/43**

(45) Bekanntmachung des Hinweises auf die
Patenterteilung:
**20.03.91 Patentblatt 91/12**

(84) Benannte Vertragsstaaten:
**AT BE CH FR GB IT LI NL SE**

(56) Entgegenhaltungen:
**GB-A- 750 894**
**US-A- 4 616 535**

**ENGINEERING, Band 2, Nr. 2, 1977; J.M.
SHARMAN: "Threaded fasteners"**

**Idem**

**NASA TECH. BRIEFS, Band 1, Nr. 2, 1976,
Seite 253, Houston, Texas; J.F. CHARLES et
al.: "Large-diameter fasteners of CRES alloy"**

(73) Patentinhaber: **BBS Kraftfahrzeugtechnik Aktiengesellschaft
Am Hohenstein 113a
W-7622 Schiltach(DE)**

(72) Erfinder: **Baumgartner, Heinrich
Waldstrasse 2
W-7623 Schenkenzell(DE)**

(74) Vertreter: **Kinkelin, Ulrich, Dipl.-Ing.
Weimarer Strasse 32/34 Auf dem Goldberg
W-7032 Sindelfingen(DE)**

## Beschreibung

Die Erfindung betrifft eine Vorrichtung gemäß dem Oberbegriff des Hauptanspruchs. (US-A-4616535)

Aluminiumfelgen sind teuer und daher Gegenstand von Diebstählen oder Diebstahlsversuchen. Es gibt hier verschiedene Möglichkeiten von Versuchen, den Diebstahl zu erschweren. Manche dieser Versuche bestehen darin, abschließbare Radschrauben vorzusehen. Diese Lösungsrichtung hat folgende Nachteile:

a) Man benötigt einen Schlüssel, der außerordentlich klein ist und deshalb leicht verlorengehen kann.

b) Schlüssel mit einem hohen Sicherungsgrad sind deshalb schlecht möglich, weil ja die Schloßzylinder sehr klein sind und deshalb die Kodierung des Schloßes primitiv bleibt.

c) Ist die Radschraube angezogen, dann muß man das Schloß wieder schließen, was manche vergessen, nachdem sie vorher das Schloß entriegelt haben.

d) Das Schloß ist in einer außerordentlich exponierten Lage vorgesehen, wo es schmutzen kann, einfrieren kann oder sonstwie beschädigt werden kann, so daß es funktionsuntüchtig wird. Auch kann das Schloß leicht korodieren.

e) Das Schloß stellt für die Radschraube eine Schwächung dar, so daß sie aus Spezialmaterial hergestellt werden muß, wenn die Schwächungen kompensiert werden sollen.

f) Es ist zu teuer, jede Radschraube abschließbar vorzusehen, so daß die Sicherung meist nur für eine einzige Radschraube vorgesehen ist.

g) Gelingt es dem Dieb, den darunter befindlichen Sechskant freizulegen, indem er die Sicherungs-Abdeckkappe abreißt, besteht kein Diebstahlschutz mehr.

h) Die mit einem Schlüssel abschließbaren Sicherungsvorrichtungen sind vierteilig, wenn man die Radschraube dazuzählt.

i) Die bekannten Vorrichtungen sind so teuer, daß man sich je Rad nur eine einzige Vorrichtung leisten kann.

Eine andere Lösungsrichtung der gattungsgemäßen Art (US-A-4616535) besteht darin, den Kopf der Radschraube so auszubilden, daß ein normaler Radmutternschlüssel nicht paßt. Vielmehr kann ein solches Werkzeug nur unter Zwischenschaltung eines Adapters angesetzt werden, der mit der Radschraube geliefert wird. Damit Besitzer eines Adapters gleichwohl nicht fremde Radschrauben lösen können, sind beide Teile derart formkodiert, daß ein Adapter nur auf die zugehörige Radschraube paßt. Gemäß der US-A-4616535 sind am Umfang des Kopfes der Radschraube ungleichmäßig verteilte Nuten vorgesehen, wobei die Kodierung durch unterschiedliche Positionen der Nuten zueinander bewirkt wird. Der passende Adapter hat entsprechend positionierte radial einwärts ragende Stege. Unterschiedliche Positionen der Nuten bzw. Stege zueinander - und zwar von Set zu Set verschieden - bedingen einen aufwendigen Herstellungsprozeß. Dabei sind dennoch Toleranzen unvermeidlich, die zwar in der Weise aufgefangen werden können, daß der jeweilige Adapter auf die zugehörige Radschraube aufgesteckt werden kann, aber für die Drehmomentübertragung sind von mehreren Nut/Steg-Paaren meist nur zwei Paare effektiv. Dies limitiert das übertragbare Drehmoment beziehungsweise die Lebensdauer der Vorrichtung oder zwingt zu teurem Spezialstahl. Gleichwohl müssen die Stege eine große Fußbreite erhalten, wodurch deren Anzahl beschränkt und die Variabilität der Kodierung begrenzt wird. In der Handhabung erweist es sich als nachteilig, daß der Adapter nur in einer bestimmten Drehlage auf den Kopf der Radschraube gesteckt werden kann. Schließlich liegt der bekannten Vorrichtung das Konzept zugrunde, die Radschraube wie eine normale Serienradschraube erscheinen zu lassen, was bedingt, daß eine Zierkappe aufgesetzt wird, die das Erscheinungsbild des Sechskants imitiert. Damit am Fahrzeugrad keine Unwucht entsteht, muß das Gesamtgewicht von Radschraube und Zierkappe dem Gewicht einer Serienradschraube gleichen, womit für die Radschraube selbst weniger Material zur Verfügung steht.

Aufgabe der Erfindung ist es, eine Vorrichtung der eingangs genannten Art anzugeben, die kombiniert sowohl einen Dieb auf die anzutreffenden Schwierigkeiten aufmerksam macht als auch wenige Teile aufweist als auch der Radschraube ihre Festigkeit beläßt als auch mit Schlagschraubern anschraubbar ist, wie dies in Werkstätten geschieht, als auch mit Schmutz, Wasser und Eis fertig wird als auch die beim Anziehen oder Lösen der Radschraube auftretenden Drehmomente sicher aufnehmen kann als auch wenig Umdenken gegenüber normalen Radschrauben erfordert als auch leicht massenfertigungsfähige Formen hat und damit billig wird als auch den Diebstahl erheblich erschwert und die Zeit für einen Dieb zu lange macht, die er benötigen würde um die Radschraube zu lösen.

Erfindungsgemäß wird diese Aufgabe durch die aus dem kennzeichnenden Teil des Hauptanspruchs ersichtlichen Merkmale gelöst.

Die sichtbare Verzahnung signalisiert, daß ein Diebstahlschutz vorhanden ist, so daß das Lösen der übrigen nichtgesicherten Serienradschrauben am Rad unterbleibt. Die Verzahnungen können mit der hierfür ausgereiften Technologie hergestellt werden, was kostengünstig ist und gewährleistet, daß das Drehmoment auf einen Großteil der Zähne verteilt wird, was Beschädigungen auch bei festsitzenden Radschrauben vermeidet. Die größere Zähnezahl erhöht die Kodierungsmöglichkeiten hinsichtlich Zahnzahl, auch gleiten Ersatzwerkzeuge, wie Zangen, eber ab. Der Adapter kann in einer Vielzahl von Drehlagen auf die Radschraube gesteckt werden, womit ein umständliches Probieren entfällt. Die Kodierung hinsichtlich der Zahnhöhe kann zufolge der guten Drehmomentverteilung bis auf kleine Zahnhöhen von nur 0,5 mm erweitert werden und hierbei kann ein Ersatzwerkzeug besonders schlechten Halt finden.

Durch die Merkmale des Anspruchs 2 erhält man eine einfache und billige Herstellung, gekoppelt mit einer hohen Festigkeit.

Das Gleiche gilt auch für die Merkmale des Anspruchs 3 hinsichtlich des Sechskants.

Durch die Merkmale des Anspruchs 4 kommt man zu einer Verzahnung, die an sich ganz anderen Zwecken dient, hier jedoch in der Lage ist, hohe Kräfte zu übertragen. Man vermeidet dann punktförmige Kräfte oder Linienkräfte.

Das Maß gemäß Anspruch 5 eignet sich bei solchen Vorrichtungen besonders bei denen das Gewinde durch die Nabe festgelegt ist und nur entweder M12 x 1,5 oder M14 x 1,5 sein kann und bei der andererseits der Sechskant ebenfalls festgelegt ist und entweder die Schlüsselweite 17 oder 19 mm haben darf.

Durch die sehr hohen Toleranz- und Spielwerte gemäß Anspruch 6 gelingt es, die Vorrichtung einfach herzustellen, den Sechskant einfach aufzuschieben und mit Schmutz, Eis usw. leicht fertig zu werden. Bevorzugt wird ein Spiel von 0,2 mm.
Durch die Merkmale des Anspruchs 7 schafft man Platz für den Schmutz. In den meisten Fällen dürfte es jedoch nicht möglich sein, die Ringnut vorzusehen, wenn der Kopf kalt fließgepresst ist. Vielmehr ist hierzu normalerweise eine Drehbearbeitung notwendig.

Solche Merkmale des Anspruchs 8 kann man in den Auslauf auch in der kalt Fließpress-Technik herstellen.

Durch die Merkmale des Anspruchs 9 kann man die beiden Teile der Vorrichtung besser miteinander vereinigen.

Durch die Merkmale des Anspruchs 10 wird man noch besser mit dem Schmutz fertig.

Durch die Merkmale des Anspruchs 11 spart man Bauhöhe, so daß der Sechskant näher an den Gewindeschaft herankommt und die Kräfte vom Sechskant zum Gewindeschaft besser übertragen werden.

Die Erfindung wird nunmehr anhand von zwei Ausführungsbeispielen beschrieben. Die Zeichnung ist maßstäblich. Die Maßstabsangabe gestattet, der Zeichnung Maße zu entnehmen.

In der Zeichnung zeigen:

Figur 1      eine wesentlich vergrößerte Darstellung einer Radschraube in Seitenansicht,

Figur 2      die teilweise aufgebrochene Seitenansicht einer für die Radschraube nach Figur 1 vorgesehenen Adapters,

Figur 3      und 4 die gleiche Darstellung eines zweiten Ausführungsbeispiels,

Figur 5      die nochmals vergrößerte Darstellung des Schmutzauslaufs für das zweite Ausführungsbeispiel.

Eine Radschraube 11 besteht aus dem Schraubenmaterial Qualität 10.9. Sie hat eine geometrische Längsachse 12. Ihr Schaft 13 ist rotationssymmetrisch zu dieser geometrischen Längsachse 12. Er ist 40 mm lang und hat damit die für Aluminiumfelgen notwendige Länge. Auf einer Länge von 25 mm ist auf den Schaft 13 ein Gewinde 14 M12 x 1,5 aufgeschnitten. Die restlichen 4 mm bleiben ohne Gewinde. Oben geht der Schaft 13 in eine Verdickung 16 über die die Form einer Kalotte einer Kugel mit einem Durchmesser von 24 mm hat und rotationssymmetrisch zur geometrischen Längsachse 12 ist. Die Verdickung 16 geht oben in eine kreisringförmige Außenfläche 17 über. Diese geht nach oben hin in eine Stirn-Ringfläche 18 über, die ebenfalls rotationssymmetrisch ist und nach innen zu in eine Ringnut 19 über geht, die einen Radius von 2 mm hat und rotationssymmetrisch ist. Da die Ringnut 19 um das Maß der Stirn-Ringfläche 18 nach innen versetzt ist, und da das obere Ende der Ringnut oberhalb des unteren Endes liegt, hat auch ein an die Ringnut 19 anschließender Kopf 21 einen Außendurchmesser von 21,8 mm. Der Kopf ist 11,5 mm hoch. Er ist rotationssymmetrisch und trägt - abgesehen von einer Fase 20, die mit 45° angeschrägt ist, eine Außenverzahnung 22, deren Zähne 23 alle gleiche Form haben, achsparallel sind und regelmäßig verteilt sind.Die Außenverzahnung ist eine Verzahnung nach DIN 5480, hat ein Bezugsdurchmesser von 22 mm. Der Kopf 21 hat eine Stirnfläche 24, die senkrecht zur geometrischen Längsachse 12 steht und eben ist.

Die Außenverzahnung 22 hat Zähnezahlen von 15, 16, 17, 19, 20 und 21.

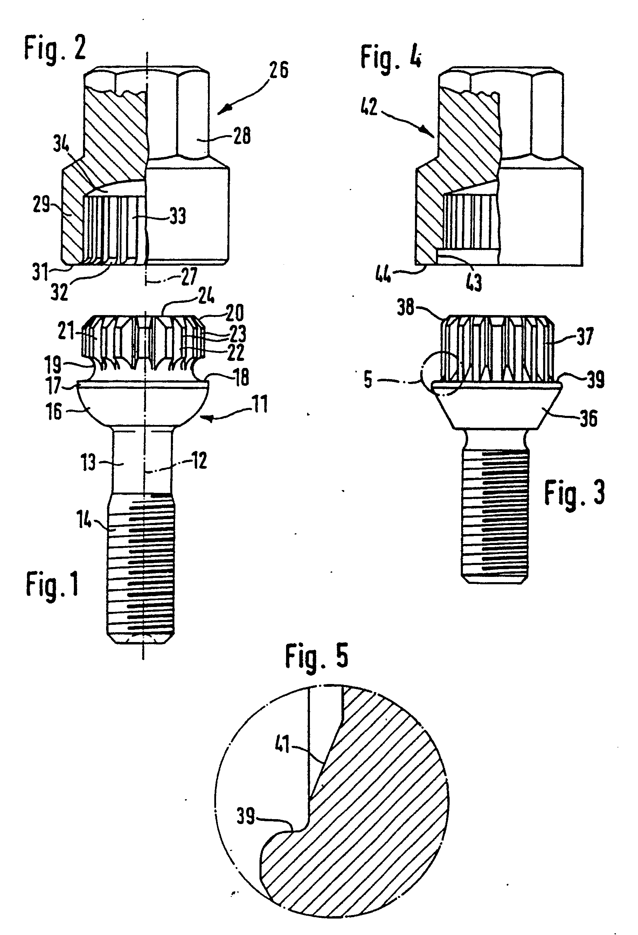

Gemäß Figur 2 hat ein Adapter 26 eine geometrische Längsachse 27 die beim Aufstrecken und Abnehmen mit der geometrischen Längsachse 12 fluchtet. Oben hat der Adapter 26 einen Norm-Sechskant 28 der Schlüsselweite 19 oder 17. Unten geht der Adapter 26 in einen Hutrand 29 über der rotationssymmetrisch zur geometrischen Längsachse 27 ist. Unten hat der Huntrand 29 eine nach unten weisende Stirnfläche 31, deren innerer Bereich auf der Stirn-Ringfläche 18 aufsitzt, wenn beide Teile vereint sind, Nach innen zu geht die Stirnfläche 31 in eine kleine Rundung 32 über, die koaxial ist und erst nach dieser, nach oben hin schließt sich eine Innenverzahnung 33 an und zwar nach DIN 5480.

Je nach dem, welche Außenverzahnung 22 vorgesehen ist, hat auch die Innenverzahnung 33 15 oder 16 oder 17 oder 18 oder 20 oder 21 Zähne. Das Material ist hier Cq 15 und der Bereich der Innenverzahnung 33 ist auf 50 bis 55 HRC einsatzgehärtet.

Ein anderes ebenfalls für das kalt Fließpressen geeignetes Material wäre 37 Cr 4. Oberhalb der Innenverzahnung 33 ist noch ein niedriger Dom 34 vorgesehen, von dem im zusammengesteckten Zustand die Stirnfläche 24 nur einen sehr geringen Abstand hat.

Eine noch mehr für das kalt Fließpressen geeignete Ausführungsform zeigen die Figuren 3 und 4. Nach der genauen Beschreibung des ersten Ausführungsbeispiels kann man sich hier kürzer fassen: Statt der Verdickung 16, deren Außenfläche auf der Form einer Kreiskalotte beruht, ist hier ein Kegelstumpf 36 vorgesehen, da manche Felgen Befestigungslöcher mit einem Kegelstumpf haben. Bei diesem Ausführungsbeispiel ist die Außenverzahnung 37 von der Fase 38 beginnend bis zur Stirn-Ringfläche 39 heruntergezogen und damit länger als beim ersten Ausführungsbeispiel, woraus sich eine noch höhere Belastbarkeit der Außenverzahnung 37 ergibt. Gemäß Figur 5, die eine Teilvergrößerung des Bereichs 5 darstellt, verläuft am Ende der Zähne der Nutgrund 41 unter einem Winkel von etwa 30° nach außen hin zur Stirn-Ringfläche 39, so daß die Höhe jedes Zahns dementsprechend abnimmt und auf dem Nutgrund 41 dann Schmutz oder dergleichen nach außen bewegt wird, wenn der Adapter 42 aufgeschoben wird. Bei diesem ist statt lediglich der kleinen Rundung 32 eine deutlich längere, etwas nach außen versetzte koaxiale Kreiszylinderfläche 43 vorgesehen, so daß auf dieser sich ebenfalls Schmutz, Eis oder dergleichen ansammeln kann ohne zu verhindern, daß die Stirnfläche 44 auf der Stirn-Ringfläche 39 bestimmungsgemäß aufsitzen kann.

Wenn die Radschraube das gleiche Gewicht hat wie die jeweilige Serienradschraube, dann entsteht keine zusätzliche Unwucht des am Fahrzeug befestigten Rades.

## Ansprüche

1. Vorrichtung zum Erschweren des Diebstahls von Aluminium-Feigen von Kraftfahrzeugen umfassend eine anstelle einer Serienradschraube zu verwvendende Radschraube (11) mit einem Gewindeschaft (13), der ein Außengewinde mit M 12x1,S mm oder M14x1,5 mm hat,

mit einer zur geometrischen Längsachse der Radschraube (11) rotationssymmetrischen, im Durchmesser größer werdenden Verdickung (16, 36), die im Gebrauch in einer komplementären Schüssel der Felge sitzt und eine Stirn-Ringfläche (18, 39) auWeist,

und mit einem vom Außengewinde (14) aus gesehen jenseits der Verdickung (16, 36) liegenden Kopf (21), der umrissmäßig kleiner ist als der größte Durchmesser der Verdickung und an seinem Umriß parallel zur geometrischen Längsachse (12) verlaufende Angriffsflächen für die Einleitung eines Drehmoments aufweist,

welche Vorrichtung weiterhin einen auf den Kopf (21) der Radschraube (11) lose aufsteckbaren Adapter (26, 42) umfasst mit einem Sechskant (28) zum Ansetzen eines Drehmomentwerkzeuges, dessen Schlüsselweite 1 7mm oder l9mm beträgt, sowie mit einem den Kopf (21) der Radschraube (11) übergreifenden Hutrand (29), an dessen Innenfläche Gegenangriffsflächen ausgebildet sind, die komplementär zu den Angriffsflächen des Kopfes (21) sind, wobei der Außenumfang des Hutrandes (29) erheblich größer ist als der Außenumfang des Sechskants (28),

gekennzeichnet durch folgende Merkmale :
a) die Angriffsflächen sind die Flanken der regelmäßig verteilten Zähne (23) einer Außenverzahnung (22,37),
b) die Gegenangriffsflächen sind die Flanken der Zähne einer entsprechenden Innenverzahnung (33),
c) die Außenverzahnung (22, 37) und Innenverzahnung (33) weist jeweils eine gleiche Zahl n von Zähnen (23) auf, wobei n eine Zahl zwischen 12 und 24 ist und die Zähne (23) zwischen 0,5 mm und 3 mm hoch sind,
d) im Endbereich der Außenverzahnung (22, 37) ist vor der Stirn-Ringfläche (18, 39) ein Auslauf (19, 41) für in der Verzähnung liegenden Schmutz vorgesehen,
e) die Radschraube hat das gleiche Gewicht wie die Serienradschraube .

2. Vorrichtung nach Anspruch 1, dadurch gekennzeichnet, daß zumindest der Kopf (21) kaltfließgepresst ist.

3. Vorrichtung nach Anspruch 1, dadurch gekennzeichnet, daß der Sechskant (28) kaltfließgepresst ist.

4. Vorrichtung nach Anspruch 1, dadurch gekennzeichnet, daß die Außenverzahnung (22, 37) und Innenverzahnung (33) nach DIN 5480 gestaltet sind.

5. Vorrichtung nach Anspruch 4, dadurch gekennzeichnet, daß der Bezugsdurchmesser bei 22 mm liegt.

6. Vorrichtung nach Anspruch 1, dadurch gekennzeichnet, daß Toleranz und Spiel im Bereich a 11 (Außenverzahnung) und H11 (Innenverzahnung) nach ISA-Norm liegt.

7. Vorrichtung nach Anspruch 1, dadurch gekennzeichnet, daß der Auslauf für den Schmutz eine Ringnut (19) ist, die zwischen der Außenverzahnung (22) und der Stirn-Ringfläche (18) vorgesehen ist.

8. Vorrichtung nach Anspruch 1, dadurch gekennzeichnet, daß der Auslauf für den Schmutz ein in der Seitenansicht kegelstumpfförmiger Anstieg (41) des zwischen den Zähnen befindlichen Zahngrundes zur Stirn-Ringfläche (39) hin ist.

9. Vorrichtung nach Anspruch 1, dadurch gekennzeichnet, daß der Kopf (21) in seinem freien Endbereich eine Anfasung (20, 38) aufweist, die eine Länge im Millimeterbereich hat und die zumindest die Zähne anfast, und daß nach der Anfasung der Kopf (21) endet.

10. Vorrichtung nach Anspruch 1, dadurch gekennzeichnet, daß die Innenverzahnung einen Abstand von der Stirnfläche (44) des Hutrandes hat und dieser Raum ein Schmutzaufnahmeraum ist.

11. Vorrichtung nach Anspruch 1, dadurch gekennzeichnet, daß die Höhe der Innenausnehmung des Adapters (26, 42) wenig höher als der Kopf (21) ist.

12. Vorrichtung nach Anspruch 1, dadurch gekennzeichnet, daß n eine Zahl zwischen 15 und 21 ist.

## Claims

1. Device for hindering the theft of aluminium wheel rims from motor vehicles, comprising a wheel bolt (11) which is to be used instead of a production wheel bolt and with a threaded shaft (13) which has an external screw thread with M12 x 1.5 mm or M14 x 1.5 mm, with a thickened portion (16, 36) rotationally symmetrical about the geometrical longitudinal axis of the wheel bolt (11), increasing in diameter, which is seated when in use in a complementary depression of the wheel rim, and which has an end annular surface (18, 39), and with a head (21) lying, viewed from the external screw thread (14), on the other side of the thickened portion (16, 36), which is smaller in terms of its circumference than the largest diameter of the thickened portion and has, at its circumference, engagement surfaces, running parallel to the geometrical longitudinal axis (12), for the introduction of a torgue, which device furthermore comprises an adaptor (26, 42) which can be fitted loosely onto the head (21) of the wheel bolt (11), with a hexagon cap (28) for the attachment of a torgue tool whose wrench size is 17 mm or 19 mm, and with a cap edge (29) covering the head (21) of the wheel bolt (11) and on the inner surface of which counterengagement surfaces are designed which are complementary to the engagement surfaces of the head (21), the external circumference of the cap edge (29) being considerably larger than the external circumference of the hexagon cap (28), characterised by the following features:
a) the engagement surfaces are the flanks of the regularly distributed teeth (23) of an external toothing (22, 37),
b) the counterengagement surfaces are the flanks of the teeth of a corresponding internal toothing (33),
c) the external toothing (22, 37) and internal toothing (33) each have an identical number n of teeth (23), n being a number between 12 and 24 and the teeth (23) having a height of between 0.5 mm and 3 mm,
d) a run-off (19, 41) for dirt lying in the toothing is provided in the end region of the external toothing (22, 37) in front of the end annular surface (18, 39),
e) the wheel bolt has the same weight as the production wheel bolt.

2. Device according to Claim 1, characterised in that at least the head (21) is cold extruded.

3. Device according to Claim 1, characterised in that the hexagon cap (28) is cold extruded.

4. Device according to Claim 1, characterised in that the external toothing (22, 37) and internal toothing (33) are designed in accordance with DIN 5480.

5. Device according to Claim 4, characterised in that the reference diameter is 22 mm.

6. Device according to Claim 1, characterised in that tolerance and play in the region a11 (external toothing) and H11 (internal toothing) are in accordance with 1SA standards.

7. Device according to Claim 1, characterised in that the run-off for the dirt is an annular groove (19) which is provided between the external toothing (22) and the end annular surface (18).

8. Device according to Claim 1, characterised in that the run-off for the dirt is an incline (41), frustoconical in side view, of the tooth bottom situated between the teeth in the direction of the end annular surface (39).

9. Device according to Claim 1, characterised in that the head (21) has, in its free end region, a chamfer (20, 38) which has a length in the region of millimetres and which chamfers at least the teeth, and in that the head (21) ends after the chamfer.

10. Device according to Claim 1, characterised in that the internal toothing is at a distance from the end surface (44) of the cap edge, and this space is a dirt-collection space.

11. Device according to Claim 1, characterised in that the height of the internal recess of the adaptor (26, 42) is slightly higher than the head (21).

12. Device according to Claim 1, characterised in that n is a number between 15 and 21.

## Revendications

1. Dispositif destiné à rendre plus difficile le vol des jantes d'aluminium de véhicules automobiles comportant une vis de roue (11), à utiliser à la place d'une vis de roue de série, avec une tige filetée (13) qui possède un filetage de M12 x 1,5 mm ou M14 x 1,5 mm, comportant une surépaisseur (16, 36) symétrique en rotation par rapport à l'axe longitudinal géométrique de la vis de roue (11), de diamètre croissant, qui en position d'utilisation, repose dans un creux complémentaire de la jante et présente une surface annulaire frontale (18, 39), et comportant une tête (21) située au-delà de la surépaisseur (16, 36), vue à partir du filetage (14) et dont le contour est plus petit que le plus grand diamètre de la surépaisseur et qui présente, sur son contour, des surfaces d'attaque parallèles à l'axe longitudinal géométrique (12), pour la transmission d'un couple de rotation, lequel dispositif comprend en outre un adaptateur (26, 42) à emboîter sur la tête (21) de la vis de roue (11), comportant un hexagone (28) pour l'application d'un outil exerçant un couple de rotation dont la largeur de clé est de 17 mm ou de 19 mm, comportant aussi une calotte (29) passant sur la tête (21) de la vis de roue (11) sur la surface intérieure de laquelle sont formées des contre-surfaces d'attaque qui sont complémentaires aux surfaces d'attaque de la tête (21), le périmètre du bord à calotte (29) étant beaucoup plus grand que le périmètre de l'hexagone (28), caractérisé par les caractéristiques suivantes :

a) les surfaces d'attaque sont les flancs des dents (23) régulièrement réparties d'une denture extérieure (22, 37),

b) les contre-surfaces d'attaque sont les flancs des dents d'une denture intérieure (33) correspondante,

c) la denture extérieure (22, 37) et la denture intérieure (33) présentent chacune un même nombre (n) de dents (23), n étant un nombre compris entre 12 et 24 et les dents (23) ayant une hauteur comprise entre 0,5 mm et 3 mm,

d) dans la région terminale de la denture extérieure (22, 37), il est prévu pour la saleté se trouvant dans la denture, un écoulement (19, 41) placé devant la surface annulaire frontale (18, 39),

e) la vis de roue a le même poids que la vis de roue de série.

2. Dispositif selon la revendication 1, caractérisé en ce qu' au moins la tête 21 est extrudée à froid.

3. Dispositif selon la revendication 1, caractérisé en ce que l'hexagone (28) est extrudé à froid.

4. Dispositif selon la revendication 1, caractérisé en ce que la denture extérieure (22, 37) et la denture intérieure (33) sont conçues conformément à la norme DIN 5480.

5. Dispositif selon la revendication 4, caractérisé en ce que le diamètre de référence est de 22 mm.

6. Dispositif selon la revendication 1, caractérisé en ce que les tolérances et le jeu se situent dans la région a11 (denture extérieure) et H11 (denture intérieure) conformément à la norme ISA.

7. Dispositif selon la revendication 1, caractérisé en ce que l'évacuation des saletés est constituée par une rainure annulaire (19) qui est prévue entre la denture extérieure (22) et la surface annulaire frontale (18).

8. Dispositif selon la revendication 1, caractérisé en ce que l'évacuation de la saleté est constituée par une surface montante (41), de forme tronconique vue latéralement, du fond de dent se trouvant entre les dents, en direction de la surface annulaire frontale (39).

9. Dispositif selon la revendication 1, caractérisé en ce que la tête (21) présente, dans sa région terminale libre, un chanfrein (20, 38) qui a une longueur de l'ordre de quelques millimètres et qui fait qu'au moins les dents sont chanfreinées et en ce qu'après le chanfrein, la tête (21) se termine.

10. Dispositif selon la revendication 1, caractérisé en ce que la denture intérieure est à une certaine distance de la surface frontale (44) du bord à calotte et en ce que cet espace est destiné à recueillir la saleté.

11. Dispositif selon la revendication 1, caractérisé en ce que la hauteur de l'évidement intérieur de l'adaptateur (26, 42) est inférieure à la hauteur de la tête (21).

12. Dispositif selon la revendication 1, caractérisé en ce que n est un nombre compris entre 15 et 21.

EP 0 287 702 B1

**Fig. 2**

26
28
34
29
33
31
32
27

**Fig. 4**

42
44
43

24
20
21
23
22
19
18
17
16
11
13
12
14

**Fig.1**

38
37
5
39
36

**Fig. 3**

**Fig. 5**

41
39

8